# EUROPÄISCHE PATENTSCHRIFT

(11) **EP 1 697 658 B1**
(45) Veröffentlichungstag und Bekanntmachung des Hinweises auf die Patenterteilung: **18.07.2007**
(21) Anmeldenummer: 04786799.9
(22) Anmeldetag: 17.09.2004
(51) Int. Cl.: F16H 37/02

(54) **GETRIEBE ZUM ÜBERTRAGEN VON DREHBEWEGUNGEN MIT KONSTANTER ÜBERSETZUNG**
GEARING FOR TRANSMITTING ROTATIONAL MOTIONS WITH A CONSTANT RATIO
BOITE DE TRANSMISSION SERVANT A TRANSMETTRE DES MOUVEMENTS ROTATIFS A RAPPORT CONSTANT

(30) Priorität: 20.09.2003 DE 10343647
(43) Veröffentlichungstag der Anmeldung: 06.09.2006
(73) Patentinhaber: YÖNDEM, Ilyas, 33428 Harsewinkel (DE)
(72) Erfinder: YÖNDEM, Ilyas, 33428 Harsewinkel (DE)
(74) Vertreter: Findeisen, Andreas
(86) Internationale Anmeldenummer: PCT/DE2004/002080
(87) Internationale Veröffentlichungsnummer: WO 2005/028922

(56) Entgegenhaltungen:
- DE-A1- 2 439 042
- DE-A1- 19 938 323
- DE-C- 946 498
- DE-C2- 10 024 905

## Beschreibung

Die Erfindung betrifft ein Getriebe zum Übertragen von Drehbewegungen mit konstanter Übersetzung.

Es sind bereits Getriebe bekannt, die mit wenigen Bauteilen und geringem Bauraum hohe Übersetzungen ins Langsame und, falls keine Selbsthemmung auftritt, auch ins Schnelle ermöglichen. Solche Getriebe zeigen beispielsweise die DE 100 24 905 C2 (Harmonic-Drive-Getriebe) und die DE 199 38 323 A1 (mehrstufiges Planetengetriebe), die als nächstliegender Stand der Technik angesehen wird.

Der Erfindung liegt die Aufgabe zugrunde, ein alternatives Getriebe mit konstanter Übersetzung zu schaffen.

Diese Aufgabe wird mit den Merkmalen der Patentansprüche 1 bis 3 gelöst, deren technische Merkmale im Ausführungsbeispiel näher beschrieben werden.

Ein Ausführungsbeispiel der Erfindung ist in der Zeichnung dargestellt. Es zeigen:

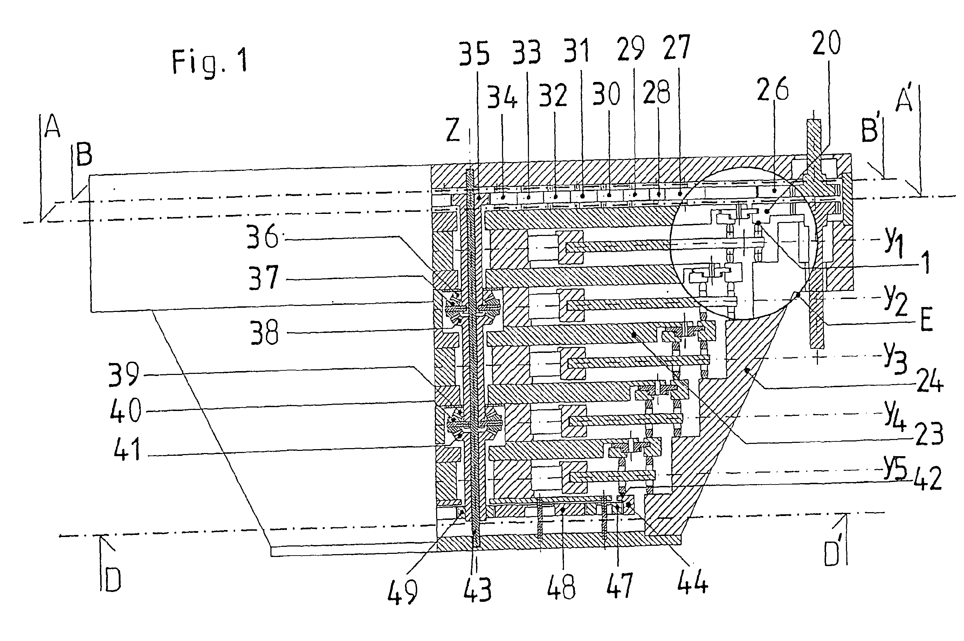

Fig. 1 eine halbseitig geschnittene Seitenansicht des erfindungsgemäßen Getriebes

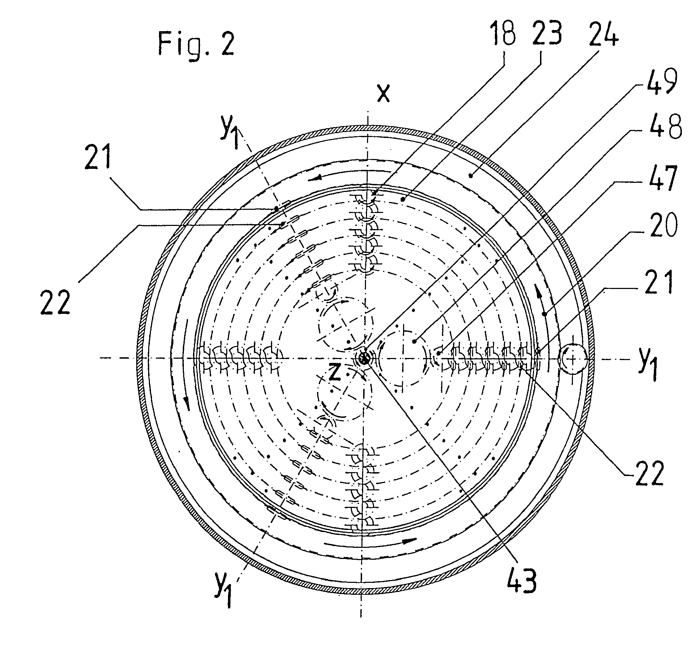

Fig. 2 eine Schnittdarstellung des Getriebes gemäß der Schnittlinie B-B' in Fig. 1

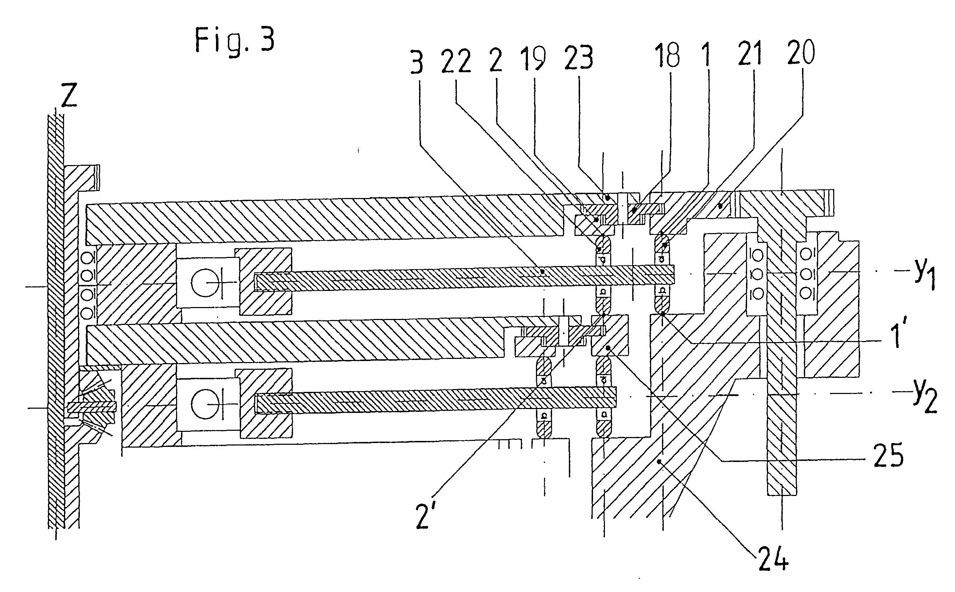

Fig. 3 eine vergrößerte Darstellung der Einzelheit "E" gemäß Fig. 1

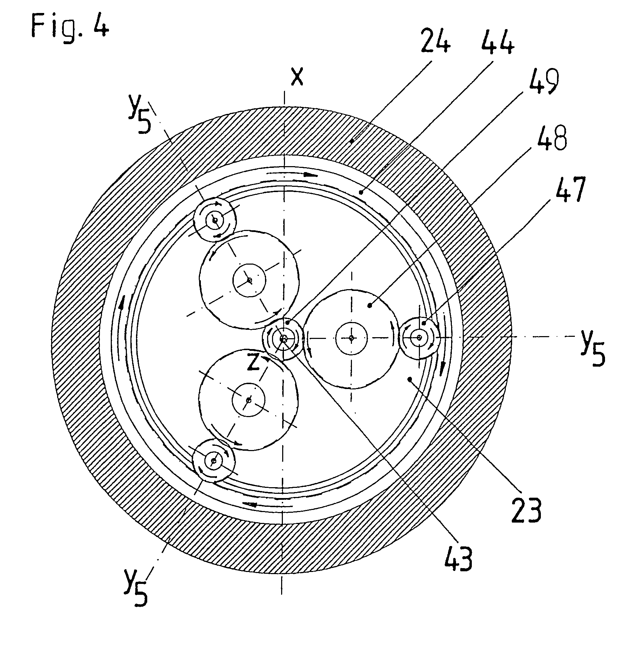

Fig. 4 eine Schnittdarstellung des Getriebes gemäß der Schnittlinie D-D' in Fig. 1

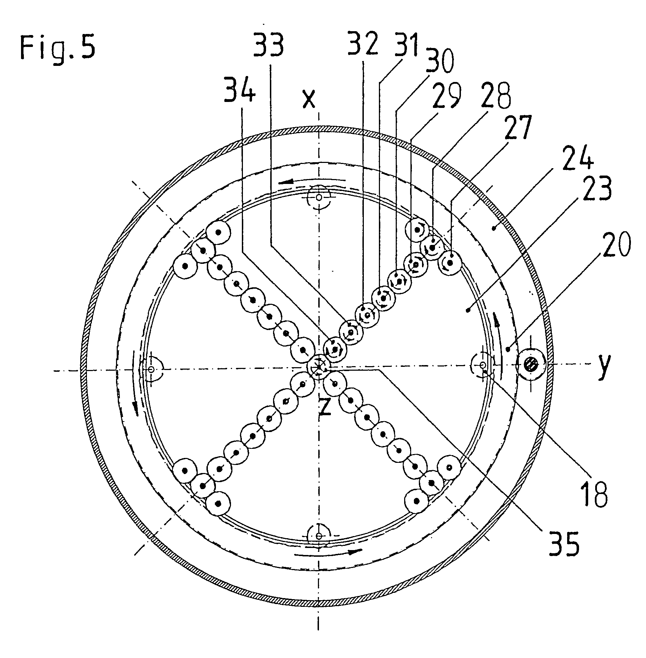

Fig. 5 eine Schnittdarstellung des Getriebes gemäß der Schnittlinie A-A' in Fig. 1

Das in der Zeichnung dargestellte Getriebe ist zur Übertragung von Drehbewegungen mit konstanter Übersetzung vorgesehen. Das Getriebe besteht aus einem Getriebegehäuse mit einem äußeren Gehäuseteil 24 und mehreren inneren Gehäuseteilen 23.

Im Getriebegehäuse sind mehrere erste Getriebestufen angeordnet, die jeweils in Reihe geschaltet sind. Dabei weist jede erste Getriebestufe jeweils ein ringförmiges Antriebsrad 20 und einen Umlaufräderträger mit mindestens einem daran befestigten Achsenbauteil 3 auf. Das ringförmige Antriebsrad 20 dreht sich um die Getriebehauptachse "Z" (siehe Bezugszeichen 43) und treibt zur Leistungsteilung ein erstes Umlaufrad 21 (siehe Laufbahn 1) und ein Zwischenrad 18 an. Das Zwischenrad 18 ist vorzugsweise als Stufenzahnrad ausgebildet und drehbar um eine zur Getriebehauptachse "Z" parallele Drehachse in einem inneren Gehäuseteil 23 gelagert. Das Achsenbauteil 3 erstreckt sich in radialer Richtung zur Getriebehauptachse "Z". Der Umlaufräderträger mit dem mindestens einen Achsenbauteil 3 ist an einem inneren Gehäuseteil drehbar so gelagert, dass er um die Getriebehauptachse "Z" umlaufen kann.

Weiterhin sind auf dem mindestens einen Achsenbauteil 3 ein erstes Umlaufrad 21 und radial weiter innenliegend ein zweites Umlaufrad 22 drehbar gelagert. Dabei rollt das erste Umlaufrad 21 auf einer Gehäuselaufbahn 1' ab und bewirkt somit eine Drehung des Umlaufräderträgers um die Getriebehauptachse "Z". Das zweite Umlaufrad 22 steht mit einem ringförmigen Übertragungsrad 19 in Antriebsverbindung (siehe Laufbahn 2). Dieses Übertragungsrad 19 wird wiederum von dem Zwischenrad 18 angetrieben. Das zweite Umlaufrad 22 treibt das ringförmige Antriebsrad 25 der nächsten Getriebestufe an (siehe Laufbahn 2') Demzufolge wird mit Hilfe des zweiten Umlaufrads 22 die zuvor auf zwei Leistungspfade 18 und 19 bzw. 21 und 3 aufgeteilte Leistung wieder summiert.

Im Getriebegehäuse ist ferner eine Abtriebsgetriebestufe angeordnet, welche die Bauteile mit den Bezugszeichen 27 bis 41 sowie 47 bis 49 umfasst. Die Abtriebsgetriebestufe wird von der letzten der ersten Getriebestufen (siche Bezugszeichen 42) über ein ringförmiges Antriebsrad 44 angetrieben und überträgt diese Drehbewegung über zwei Übertragungsräder 47 und 48 zunächst auf eine konzentrisch in das Innere des Getriebegehäuses hineinragende erste Welle 49.

Von der ersten Welle 49 wird die Drehbewegung über mehrere, ebenfalls mittig im Getriebegehäuse angeordnete und in Reihe geschaltete Kegelrad-Umlaufrädergetriebe mit den Bauteilen mit den Bezugszeichen 39 - 40 - 41 bzw. 36 - 37 - 38 auf eine mittig im Getriebegehäuse gelagerte zweite Welle 35 übertragen. Hierbei ist ein Zentralrad 36 bzw. 39 des jeweiligen Kegelrad-Umlaufrädergetriebes fest mit dem Getriebegehäuse verbunden und der Abtrieb erfolgt auf die Welle eines Kegelrad-Umlaufräderträgers 37 bzw. 40.

Von der mittig gelagerten zweiten Welle 35 wird die Drehbewegung schließlich über mehrere im Gehäuse drehbar gelagerte Übertragungsräder 27 bis 34 auf ein ringförmiges Abtriebsrad 26 übertragen, welches sich um die Getriebehauptachse "Z" dreht. Somit bildet die erste der ersten Getriebestufen den Antrieb und die Abtriebsgetriebestufe den Abtrieb des erfindungsgemäßen Getriebes.

## Patentansprüche

1. Getriebe zur Übertragung von Drehbewegungen mit konstanter Übersetzung, **gekennzeichnet durch**
1.1. ein Getriebegehäuse, mit einem äußeren Gehäuseteil (24) und mehreren inneren Gehäuseteilen (23),
1.2. mehrere, im Getriebegehäuse in Reihe angeordnete erste Getriebestufen, wobei jede erste Getriebestufe die folgenden Teile aufweist:
1.2.1. ein ringförmiges Antriebsrad (20),
1.2.1.1. welches sich um die Getriebehauptachse (Z) dreht
1.2.1.2. und zur Leistungsteilung ein erstes Umlaufrad (21) und ein Zwischenrad (18) antreibt, wobei das Zwischenrad (18) drehbar um eine zur Getriebehauptachse (Z) parallele Drehachse in einem inneren Gehäuseteil (23) gelagert ist,
1.2.2. einen Umlaufräderträger mit mindestens einem daran befestigten Achsenbauteil (3),
1.2.2.1. wobei sich das Achsenbauteil (3) in radialer Richtung zur Getriebehauptachse (Z) erstreckt,
1.2.2.2. und wobei der Umlaufräderträger mit dem mindestens einen Achsenbauteil (3) an einem inneren Gehäuseteil drehbar gelagert ist derart, dass er um die Getriebehauptachse (Z) umlaufen kann,
1.2.2.3. wobei auf dem mindestens einen Achsenbauteil (3) das erste Umlaufrad (21) und radial weiter innenliegend ein zweites Umlaufrad (22) drehbar gelagert sind,
1.2.2.4. und wobei das erste Umlaufrad (21) auf einer Gehäuselaufbahn (1') abrollt und **dadurch** eine Drehung des Umlaufräderträgers um die Getriebehauptachse (Z) bewirkt,
1.2.2.5. und wobei das zweite Umlaufrad (22) mit einem ringförmigen Übertragungsrad (19) in Antriebsverbindung steht, welches wiederum von dem Zwischenrad (18) angetrieben ist,
1.2.2.6. und wobei das zweite Umlaufrad (22) das ringförmige Antriebsrad (25) der nächsten Getriebestufe antreibt,
1.2.2.7. das heißt, mit Hilfe des zweiten Umlaufrads (22) wird die zuvor auf zwei Leistungspfade (18, 19 bzw. 21, 3) aufgeteilte Leistung wieder summiert,
1.3. eine im Getriebegehäuse angeordnete Abtriebsgetriebestufe (27 bis 41 und 47 bis 49),
1.3.1. wobei die Abtriebsgetriebestufe von der letzten der ersten Getriebestufen über ein ringförmiges Antriebsrad (44) angetrieben ist,
1.4. wobei die erste der ersten Getriebestufen den Antrieb und die Abtriebsgetriebestufe den Abtrieb des Getriebes bilden.

2. Getriebe nach Patentanspruch 1,
**dadurch gekennzeichnet,**
**dass** das Zwischenrad (18) als Stufenzahnrad ausgebildet ist.

3. Getriebe nach Patentanspruch 1 oder 2,
**dadurch gekennzeichnet,**
**dass** die Abtriebsgetriebestufe die Drehbewegung des ringförmigen Antriebsrads (44) überträgt und zwar
3.1. über zwei Übertragungsräder (47, 48) auf eine konzentrisch in das Innere des Getriebegehäuses hineinragende erste Welle (49),
3.2. von der ersten Welle (49) über mehrere, ebenfalls mittig im Getriebegehäuse angeordnete und in Reihe geschaltete Kegelrad-Umlaufrädergetriebe (39-40-41 bzw. 36-37-38) auf eine mittig im Getriebegehäuse gelagerte zweite Welle (35),
3.2.1. wobei ein Zentralrad (36, 39) des jeweiligen Kegelrad-Umlaufrädergetriebes fest mit dem Getriebegehäuse verbunden ist und der Abtrieb auf die Welle eines Kegelrad-Umlaufräderträgers (37, 40) erfolgt,
3.3. von der mittig gelagerten zweiten Welle (35) über mehrere, im Gehäuse drehbar gelagerte Übertragungsräder (27 bis 34) auf ein ringförmiges Abtriebsrad (26), welches sich um die Getriebehauptachse (Z) dreht.

## Claims

1. Gearing for transmitting rotational motions at constant ratio
**characterized in that**
1.1 a gear housing with an external part of housing (24) and several internal parts of housing (23),
1.2 several first gear trains seriated in the gear housing whereby each gear train comprises the following parts:
1.2.1 a ring-shaped drive wheel (20),
1.2.1.1 that rotates around the main axis of gearing (Z),
1.2.1.2 and for the purpose of power division drives a first planet wheel (21) and an intermediate wheel (18) whereby the intermediate wheel (18) is pivotally mounted around a rotational axis being parallel to the main gearing axis (Z) in an inner part of housing (23),
1.2.2 a planet wheel carrier with at least one axis component (3) attached thereto,
1.2.2.1 whereby the axis component (3) extends in radial direction to the main gearing axis (Z),
1.2.2.2 and whereby the planet wheel carrier with the minimum one axis component (3) is pivotally mounted at an internal part of housing so that it can rotate around the main gearing axis (Z),
1.2.2.3 whereby on the minimum one axis component (3) the first planet wheel (21) and radially located further inside a second planet wheel (22) are pivotally mounted.
1.2.2.4 and whereby the first planet wheel (21) rolls on a housing slide way (1') and thus effects a rotation of the planet wheel carrier around the main gearing axis (Z),
1.2.2.5 and whereby the second planet wheel (22) is in drive connection with a ring-shaped transmission wheel (19) which in turn is driven by the intermediate wheel (18),
1.2.2.6 and whereby the second planet wheel (22) drives the ring-shaped drive wheel (25) of the next gear train,
1.2.2.7 that means with the help of a second planet wheel (22) the power divided into two drive trains (18, 19 and 21, 3 respectively) beforehand is added together again.
1.3 a drive gear train (27 to 41 and 47 to 49) is arranged in the gear housing,
1.3.1 whereby the drive gear train is driven by the last of the first gear trains via a ring-shaped drive wheel (44),
1.4 whereby the first of the first gear trains forms the drive and the drive gear train the drive of the gear.

2. Gearing according to Claim 1
**characterized in that**
the intermediate wheel (18) is designed as change-over gear.

3. Gearing according to Claim 1 or 2
**characterized in that**
the drive gear train transmits the rotational motion of the ring-shaped drive wheel (44) namely
3.1 via two transmission wheels (47, 48) to a first shaft (49) that concentrically projects into the interior of the gear housing,
3.2 from the first shaft (49) via several seriated planetary type bevel gears (39-40-41 and 36-37-38 respectively) that are also arranged centrally in the gear housing, to a second shaft (35) centrally arranged in the gear housing,
3.2.1 whereby a central wheel (36, 39) of the relevant planetary-type bevel gear is firmly linked with the gear housing and the output goes to the shaft of a planetary-type bevel gear carrier (37, 40),
3.3 from the centrally supported second shaft (35) via several transmission wheels (27 to 34) that are pivotally mounted in the housing, to a ring-shaped drive wheel (26) that rotates around the main gearing axis.

## Revendications

1. Boîte de transmission servant à transmettre des mouvements rotatifs à rapport constant, **caractérisée par**
1.1. un carter de protection de la boîte de transmission composé d'une pièce extérieure (24) et de plusieurs pièces intérieures (23),
1.2. plusieurs premiers niveaux de puissance qui eux sont disposés en ligne à l'intérieur du carter de protection de la boîte de transmission, chaque premier niveau de puissance se composant des pièces suivantes :
1.2.1 une roue de transmission annulaire (20),
1.2.1.1. qui elle tourne autour de l'axe principal (Z) de la boîte de transmission
1.2.1.2. et qui, afin d'assurer la division de puissance, entraîne une première roue satellite (21) et une roue intermédiaire (18), cette roue intermédiaire (18) tournant sur un palier disposé à l'intérieur d'une des pièces intérieures (23) du carter de protection et autour d'un axe de rotation qui lui est situé en parallèle à l'axe principal (Z) de la boîte de transmission,
1.2.2. porte- roue satellite avec au moins un élément d'axe (3),
1.2.2.1. cet élément d'axe (3) s'étendant en sens radial vers l'axe principal (Z) de la boîte de transmission,
1.2.2.2. et où le porte- roue satellite avec au moins un élément d'axe (3) tourne sur un palier disposé à l'intérieur d'une des pièces intérieures du carter de protection, de telle sorte qu'il peut tourner autour de l'axe principal (Z) de la boîte de transmission,
1.2.2.3. où la première roue satellite (21) montée sur cet élément d'axe et une deuxième roue satellite (22) située plus à l'intérieur tournent toutes les deux sur palier,
1.2.2.4. où la première roue satellite (21) se déroule sur un chemin de roulement (1'), ceci ayant pour effet une rotation du porte- roue satellite autour de l'axe principal (Z) de la boîte de transmission,
1.2.2.5. où la deuxième roue satellite (22) se trouve en rapport de transmission avec une roue de transmission annulaire (19) qui elle est entraînée par la roue intermédiaire (18),
1.2.2.6. et où la deuxième roue satellite (22) entraîne la roue de transmission annulaire (25) du niveau de puissance suivant,
1.2.2.7. c'est-à-dire que, à l'aide de la deuxième roue satellite (22), la puissance divisée auparavant en différentes phases (18, 19 ou 21, 3) se voit donc à nouveau totalisée,
1.3. un niveau de puissance de la prise de mouvement (de 27 à 41 et de 47 à 49) disposé à l'intérieur du carter de protection de la boîte de transmission,
1.3.1. où ce niveau de puissance de la prise de mouvement est entraîné par le dernier des premiers niveaux de puissance, la transmission étant assurée par une roue de transmission annulaire (44),
1.4. et où le premier des premiers niveaux de puissance constitue l'entraînement de la boîte de transmission, tandis que le niveau de puissance de la prise de mouvement constitue la prise de mouvement de la boîte de transmission.

2. Boîte de transmission selon la revendication 1,
**caractérisée par le fait**
**que** la roue intermédiaire (18) est conçue sous forme d'une roue dentée étagée.

3. Boîte de transmission selon la revendication 1 ou 2,
**caractérisée par le fait**
**que** le niveau de puissance de la prise de mouvement assure la transmission du mouvement de rotation de la roue de transmission annulaire (44), à savoir
3.1 par deux roues de transmission (47, 48) et à un premier arbre (49) qui lui dépasse de façon concentrique sur l'intérieur de la boîte de transmission,
3.2. du premier arbre (49), par plusieurs engrenages planétaires à roue conique (39-40-41 ou 36-37-38) qui eux aussi sont axialement disposés à l'intérieur du carter de protection de la boîte de transmission où ils sont montés en ligne, à un deuxième arbre (35) axialement disposé à l'intérieur du carter de protection de la boîte de transmission,
3.2.1. où une roue centrale (36, 39) de chaque engrenage planétaire à roue conique est raccordée à demeure au carter de protection de la boite de transmission et où la prise de mouvement est effectuée sur l'arbre d'un support d'engrenage planétaire à roue conique (37, 40),
3.3. du deuxième arbre à disposition axiale (35), par plusieurs roues de transmission (27 à 34) tournant sur palier à l'intérieur du carter de protection de la boîte de transmission, à une roue de transmission annulaire (26) qui elle tourne autour de l'axe principal (Z) de la boîte de transmission.
